# EUROPÄISCHE PATENTANMELDUNG

(11) **EP 0 588 116 A1**
(43) Veröffentlichungstag der Anmeldung: **23.03.1994**
(21) Anmeldenummer: 93113554.5
(22) Anmeldetag: 25.08.1993
(51) Int. Cl.: F16L 41/03

(54) **Verteilerstück aus Kunststoff für Schlauchleitungen**

(30) Priorität: 16.09.1992 DE 4230940
(71) Anmelder: DETHLEFFS GmbH, D-88316 Isny (DE)
(72) Erfinder: Schlick, Wolfgang, D-88299 Leutkirch (DE)
(74) Vertreter: Patentanwälte Eisele, Otten & Roth

(57) **Zusammenfassung**

Es wird ein Verteilerstück aus Kunststoff für Schlauchleitungen (10) beschrieben, insbesondere für die Wasserinstallation in Wohnwagen, mit einem Zugangs- und mehreren Abgangsstutzen (4) bzw. (7). Um bei der Verlegung der Schlauchleitungen Platz zu sparen und die Arbeitszeit für die Herstellung der Verteileranschlüsse zu senken, wird vorgeschlagen, daß alle Stutzen (1, 2) parallel zueinander und die Abgangsstutzen (7) bündelartig angeordnet sind. Dadurch ergeben sich einfache Kunststoff-Spritzformen. Mittels eines zurückziehbaren Formdorns kann einer der Abgangsstutzen (7) durch eine Querwand verschlossen und später bei Bedarf durch Aufbohren benutzbar gemacht werden.

## Beschreibung

Die Erfindung betrifft ein Verteilerstück aus Kunststoff für Schlauchleitungen, insbesondere für die Wasserinstallation in Freizeitfahrzeugen und Booten, mit einem Zugangs- und mehreren Abgangsstutzen.

Solche Verteilerstücke sind beispielsweise in einem Wohnwagen erforderlich, um die von einer Pumpe kommende Kaltwasserzuleitung zu einem Handwaschbecken, einer Brausegarnitur, einer Kücheneinrichtung und einem Warmwasserboiler zu führen. Bekannt sind dazu sogenannte Y-Stücke, die nur eine Einfachverzweigung ermöglichen. Eine Verteilung der Zugangsleitung zu vier Abgangsleitungen erfordert drei Y-Stücke und somit die Anbringung von neun Schlauchschellen, was einen beträchtlichen Arbeitsaufwand darstellt. Darüberhinaus sind die Y-Stücke aber auch für die Verlegung ungünstig. Die divergierenden Stutzen ergeben an der Abgangsseite eine breitausladende Schlauchanordnung, die in den wunschgemäß schmalen Installationskanälen nur schwer unterzubringen ist. Auch die Gesamtlänge einer Mehrfachverzweigung ist bei Verwendung von Y-Stücken ungünstig.

Bekannt ist ferner ein Verteilerstück mit mehreren wie die Zähne eines Kamms nebeneinanderliegenden Abgängen, wobei der Zugang rechtwinklig dazu in Richtung des Kammrückens angebracht ist. Dieses Verteilerstück ist in einem schmalen Schlauchleitungskanal überhaupt nicht verwendbar. Außerdem ist es infolge des erforderlichen komplizierten Spritzwerkzeugs teuer in der Herstellung.

Der Erfindung liegt die Aufgabe zugrunde, ein Verteilerstück der einleitend bezeichneten Gattung vorzuschlagen, mit dem platzsparend, schnell und einfach installiert werden kann und das sich außerdem billig herstellen läßt.

Diese Aufgabe wird erfindungsgemäß durch die kennzeichnenden Merkmale des Patentanspruchs 1 gelöst. Die Parallelität sämtlicher Stutzen erübrigt das Umlenken der Schlauchanschlüsse, so daß die Schläuche ununterbrochen parallel geführt werden können und, begünstigt durch die räumliche Anordnung der Abgangsstutzen um eine Mittelachse herum, im denkbar engsten Installationskanal Platz finden. Da im Vergleich zur Verwendung von Y-Stücken bei einer Vierfachabzweigung an Stelle von neun nur noch fünf Schlauchschellen gesetzt werden müssen, verringert sich entsprechend die Montagezeit bei gleichzeitig höherer Sicherheit vor Störungen durch Leckstellen.

Um den Vorteil der Parallelanordnung der Stutzen für die Herstellung zu nutzen, wird vorgeschlagen, daß das Verteilerstück aus zwei verschraubbaren Gehäuseteilen besteht und daß an dem einen Gehäuseteil der Zugangs- und an dem anderen Gehäuseteil die Abgangsstutzen parallel zur Verschraubungsachse angeordnet sind. Das führt zu zwei denkbar einfachen Kunststoff-Spritzformen und entsprechend preiswerten geformten Teilen, die voll automatisch miteinander verschraubt werden können.

Ein solches Gehäuse läßt sich auf einfache Weise besonders strömungsgünstig ausbilden, wenn es im wesentlichen die Form eines Zylinders mit radialen Stirnwänden hat, ferner der Zugangsstutzen an einer Stirnwand koaxial angeordnet und am inneren Übergang ausgerundet ist und wenn schließlich an der Innenseite der anderen Stirnwand in Verlängerung der Achse des Zugangsstutzens eine Umlenkspitze angeordnet ist. Die Flüssigkeit wird somit praktisch wirbelfrei aus dem Zugangsstutzen in eine dazu senkrechte Ebene umgeleitet, wo sie sich gleichmäßig verteilt und nach einer bestimmten radialen Fließstrecke sich in den einzelnen Ausgängen wieder sammelt.

Vorzugsweise werden vier Abgangsstutzen vorgesehen für die vier erwähnten Verwendungsstellen beim Wohnwagen. Nicht selten fehlt jedoch der Warmwasserboiler, so daß drei Abgänge genügen würden. Um hierfür nicht ein eigenes Spritzwerkzeug vorhalten zu müssen, wird vorgeschlagen, daß einer der Formkerne für die Ausgangsstutzen in Längsrichtung zurückziehbar ausgebildet ist. Ist dieser Kern nämlich um nur wenige Millimeter zurückgezogen, so bildet sich in dem Stutzen eine Querwand aus, die den Stutzen verschließt. Bei einem solchen Verteilerstück mit nur drei wirksamen Abgängen kann der vierte Abgang im Bedarfsfall, beispielsweise bei der nachträglichen Installation eines Boilers, durch einfaches Aufbohren in einen verwendbaren Abgangsstutzen zurückverwandelt werden.

Um insbesondere den beim Einfrieren des Wassers auftretenden Innendruck sicher aushalten zu können, wird vorgeschlagen, daß der eine Gehäuseteil eine mit einem Innengewinde versehene Kappe bildet, die in zusammengeschraubter Stellung mit ihrem Rand in eine Ringnut des anderen Gehäuseteils eintaucht. Die Kappe, die den mit einem Außengewinde versehenen anderen Gehäuseteil übergreift, ist also selbst von diesem anderen Gehäuseteil außen umfangen, was außer der Stabilität auch eine gute Abdichtung zur Folge hat. Um jedoch auch hohen Wasserdrücken mit Sicherheit standzuhalten, kann im Berich der Ringnut wenigstens eine Dichtlippe an einem der beiden zusammengeschraubten Teile angeformt sein, die sich durch den Schraubdruck bleibend verformt (fließt). Schließlich können außen an dem den Zugangsstutzen tragenden Gehäuseteil solche Ausformungen vorgesehen sein, daß ein Schraubwerkzeug drehfest an diesem Gehäuseteil angesetzt werden kann. Dies können z. B. auf der Stirnwand angebrachte Warzen sein, an denen sich das Drehwerkzeug halten kann.

Mit der Erfindung ist somit ein preiswertes Verteilerstück geschaffen, das einfach und schnell montiert und universell verwendet werden kann. Sämtliche Schlauchverbindungsstellen, die in einem Boilerschrank vorkommen, können in diesem selbst untergebracht und dadurch auch stets leicht auf dichten Sitz der Schlauchschellen überwacht werden. Die Installationskanäle können denkbar eng sein. Außer der genannten Zahl von vier Abgangsstutzen, von denen einer als Blindstutzen ausgebildet ist, kann auch jede andere zweckmäßige Zahl von Abgangsstutzen vorgesehen werden, wobei diese zwar so eng wie möglich angeordnet sind, aber doch mit einem so großen Abstand voneinander, daß die Schlauchenden leicht aufgesteckt und die Klemmschellen montiert werden können.

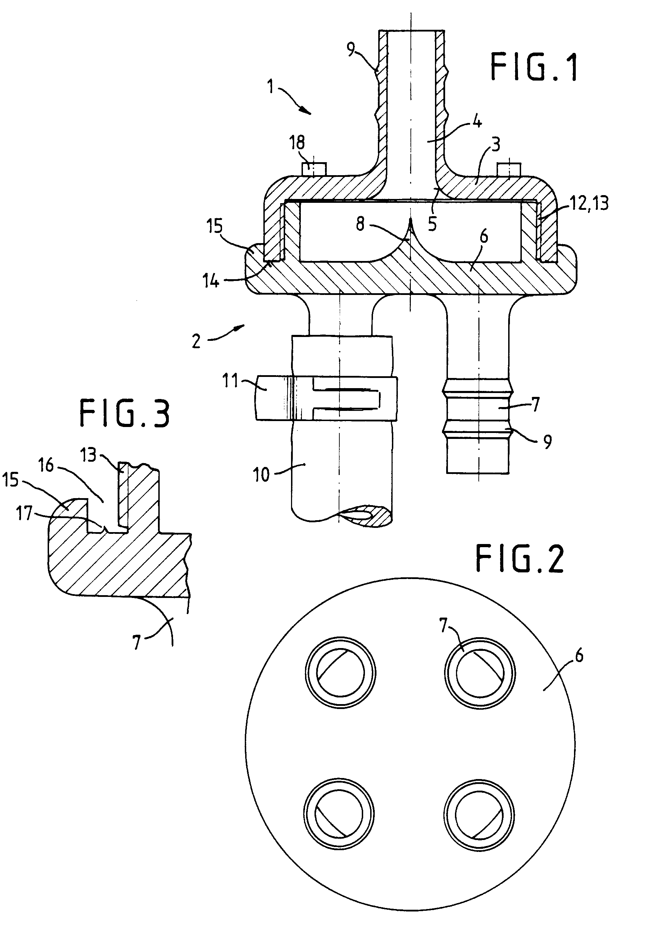

Ein Ausführungsbeispiel der Erfindung wird nachfolgend anhand der Zeichnung erläutert. Im einzelnen zeigt
- Figur 1: einen Längsschnitt eines Verteilerstücks mit vier Abgängen,
- Figur 2: eine axiale Ansicht der Abgangsseite des Verteilerstücks nach Figur 1 und
- Figur 3: einen Teilschnitt der Randpartie des abgangsseitigen Gehäuseteils in größerem Maßstab.

Das dargestellte Verteilerstück besteht aus zwei ineinandergeschraubten im wesentlichen zylindrischen Gehäuseteilen 1 und 2. An der Stirnwand 3 des Gehäuseteils 1 ist koaxial zur Zylinderachse ein Zugangsstutzen 4 angeformt. Insbesondere die Übergangskante 5 an der Innenseite ist mit verhältnismäßig großem Radius abgerundet. An der Stirnwand 6 des Gehäuseteils 2 sitzen vier Abgangsstutzen 7, die Parallel zur Zylinderachse im Quadrat angeordnet sind und somit ein Bündel bilden. Zur Verbesserung der Strömungsverhältnisse befindet sich an der Innenseite der Stirnwand 6 eine Umlenkspitze 8 genau in der Achse und somit in Verlängerung des Zugangsstutzen 4. Diese Umlenkspitze 8 entspricht etwa einem Rotationskörper, der entsteht, wenn man einen Viertelkreisbogen um dessen Tangente in einem Endpunkt rotiert.

Jeder der Zugangs- und Abgangsstutzen 4, 7 hat zwei scharfkantige Ringbunde 9, die sich in den aufgesteckten Schlauch 10 einprägen. Gebräuchlich sind hier PVC-Schläuche mit Gewebeeinlage. Eine Klemmschelle 11 umgibt den Schlauch über einem Ringbund 9 oder, wie dargestellt, zwischen zwei Ringbunden.

Im Beispiel hat der Gehäuseteil 1 ein Innengewinde 12 und der Gehäuseteil 2 an der von der Stirnwand 6 senkrecht abstehenden Ringwand ein Außengewinde 13. Die Stirnwand 6 hat einen größeren Durchmesser als das Außengewinde 13, so daß eine Ringfläche entsteht, an welcher beim Zusammenschrauben der ebene Rand 14 des Gehäuseteils 1 zur Anlage kommt. Ferner ist der Außenrand 15 der Stirnwand 6 hochgezogen, so daß er die Zylinderwand des Gehäuseteils 1 außen umfängt. Im Ergebnis ist damit am Gehäuseteil 2 eine Ringnut 16 ausgebidet, in welche das Gehäuseteil 1 passend eintaucht. Die erwähnte Ringfläche bildet den Boden der Nut 16, der zur Abdichtung mit im Beispiel einer feinen Ringlippe 17 besetzt ist, die sich unter dem beim Zusammenschrauben entstehenden Druck bleibend verformt. Um den Gehäuseteil 1 von dem Gewinde- Formkern abschrauben und mit dem Gehäuseteil 2 zusammenschrauben zu können, sind an der Außenseite der Stirnwand 3 vier warzenartige Vorsprünge 18 angeformt, die von einem geeigneten Schraubwerkzeug erfaßt werden können.

## Patentansprüche

1. Verteilerstück aus Kunststoff für Schlauchleitungen, insbesondere für die Wasserinstallation in Wohnwagen, mit einem Zugangs- und mehreren Abgangsstutzen, dadurch gekennzeichnt, daß alle Stutzen (4, 7) achsparallel zueinander und die Abgangsstutzen (7) bündelartig angeordnet sind.

2. Verteilerstück nach Anspruch 1, dadurch gekennzeichnet, daß es aus zwei verschraubbaren Gehäuseteilen (1, 2) besteht und daß an dem einen der Zugangs- (4) und an dem anderen die Abgangsstutzen (7) parallel zur Verschraubungsache angeordnet sind.

3. Verteilerstück nach Anspruch 2, dadurch gekennzeichnet, daß es im wesentlichen die Form eines Zylinders mit radialen Stirnwänden (3, 6) hat, daß der Zugangsstutzen an einer Stirnwand (3) koaxial angeordnet und am inneren Übergang (5) ausgerundet ist und daß an der Innenseite der anderen Stirnwand (6) in Verlängerung der Achse dieses Stutzen (4) eine Umlenkspitze (8) angeordnet ist.

4. Verteilerstück nach Anspruch 1, dadurch gekennzeichnet, daß einer der Abgangsstutzen durch eine eingeformte Querwand verschlossen ist.

5. Verteilerstück nach Anspruch 1,dadurch gekennzeichnet, daß der eine Gehäuseteil (1) eine mit einem Innengewinde versehene Kappe bildet, die in zusammengeschraubter Stellung mit ihrem Rand (14) in eine Ringnut (16) des anderen Gehäuseteils (2) eintaucht.

6. Verteilerstück nach Anspruch 5, dadurch gekennzeichnet, daß im Bereich der Ringnut (16) wenigstens eine Dichtlippe (17) an einem der beiden Gehäuseteile angeformt ist.
